# EUROPEAN PATENT SPECIFICATION

(11) **EP 4 300 061 B1**
(45) Date of publication and mention of the grant of the patent: **29.10.2025**
(21) Application number: 22182477.4
(22) Date of filing: 01.07.2022
(51) Int. Cl.: G01K 5/16, G01K 15/00, G01K 3/14, G01K 7/16

(54) **PROBE FOR CONDUCTING POSITION RESOLVED TEMPERATURE MEASUREMENTS**
SONDE ZUM DURCHFÜHREN VON POSITIONSAUFGELÖSTEN TEMPERATURMESSUNGEN
SONDE POUR EFFECTUER DES MESURES DE TEMPÉRATURE DE RÉSOLUTION DE POSITION

(43) Date of publication of application: 03.01.2024
(73) Proprietor: Rohde & Schwarz GmbH & Co. KG, 81671 München (DE)
(72) Inventor: Green, PeterJohn, 486041 Singapore (SG); Tiah, Elicia, 486041 Singapore (SG); Munnamgi, Venkata, 486041 Singapore (SG); Guillen, Nilo, 486041 Singapore (SG); Law, AhHock, 486041 Singapore (SG); Lim, Alex, 486041 Singapore (SG)
(74) Representative: Novagraaf Group

(56) References cited:
- WO-A1-2018/144589
- WO-A2-2013/044226
- US-A- 3 510 762
- US-A1- 2016 290 876
- US-A1- 2020 025 699
- MICHAEL D DICKEY: "Stretchable and Soft Electronics using Liquid Metals", ADVANCED MATERIALS, VCH PUBLISHERS, DE, vol. 29, no. 27, 18 April 2017 (2017-04-18), pages n/a, XP071871372, ISSN: 0935-9648, DOI: 10.1002/ADMA.201606425

## Description

### TECHNICAL FIELD OF THE INVENTION

The invention relates to a probe for conducting position resolved temperature measurements and to a measurement system comprising such a probe. The invention further relates to a calibration method for the measurement system and to a method for conducting position resolved temperature measurements.

### BACKGROUND OF THE INVENTION

There is a need to effectively monitor and locate temperature hot spots in circuits and systems. However, such monitoring can be difficult, especially in tight, confined, covered or sealed spaces.

Known solutions comprise the use of thermocouples or PN diodes as temperature sensors. However, these types of sensors are often too large and rigid to be arranged in strongly configured spaces.

In addition, these sensors only measure the temperature at the position at which they are attached and are typically not capable to detect an exact location of a temperature change, e.g. the source of a temperature hotspot.

The document US 2020/0025699 A1 discloses a soft, flexible microtube sensor and an associated method of sensing force. Thereby, a liquid metallic alloy is sealed within a microtube as thin as a strand of human hair to form a physical force sensing mechanism.

The document WO 2018/144589 A1 discloses a stretchable, conductive tubule which is capable of operating as an electrical interconnect and/or a sensor.

The document US 2016/0290876 A1 discloses a temperature measurement which is performed using a sensor cable. The measuring arrangement has a first signal conductor, a feed unit for feeding a measurement signal into the signal conductor, and an analyzing unit which ascertains and analyzes a change in the signal transit time of the measurement signal as a result of a temperature-induced change in a first temperature-dependent dielectric constant and is configured to derive a temperature signal from the ascertained signal transit time.

### SUMMARY OF THE INVENTION

Thus, it is an objective to provide an improved probe, an improved measurement system comprising said probe and an improved method for conducting position resolved temperature measurements. In particular, the above-mentioned disadvantages should be avoided.

The objective is achieved by the solution provided in the enclosed independent claims. Advantageous implementations of the present invention are further defined in the dependent claims.

According to the present invention, there is provided measurement system for conducting position resolved temperature measurements as defined in claim 1. The measurement system comprises a probe comprising a flexible cable. The flexible cable comprises a sheath surrounding an elongated channel, and a liquid metal material disposed in the elongated channel forming a liquid metal path, wherein an externally induced temperature increase at a location along the length of the cable induces a change of electrical characteristics, in particular an increase of an impedance, of the liquid metal material at or near said location. The probe further comprises electrical terminals arranged on both ends of the flexible cable, wherein the electrical terminals are designed for a measurement of an electrical parameter of the liquid metal path; and an interface arranged on one end of the flexible cable, wherein the interface is designed for emitting an EM, electromagnetic, signal or wave into the liquid metal path. The measurement system further comprises: an emitter configured to emit an EM signal or wave into the liquid metal path via the interface of the probe; a capture unit configured to capture a reflection of said EM signal or wave; and a processor configured to determine the location of the externally induced temperature increase along the length of the cable based on a time between the emission and the capture of the reflection of the EM signal or wave.

This achieves the advantage that a flexible probe for a temperature sensor is provided. By connecting a suitable measurement instrument or device to the probe both a temperature increase and a location of said temperature increase along the length of the cable can be measured. For instance, the temperature increase can be measured by monitoring the electrical parameter of the liquid metal path between the electrical terminals. This electrical parameter e.g. a resistance, an impedance, or a conductivity, of the liquid metal path can be temperature dependent. The location of the temperature increase can be measured by transmitting an EM signal or wave into the liquid metal path via the interface and detecting a time until a reflection of the EM signal or wave is captured.

In this way, "position resolved" (i.e., spatially resolved or location resolved) temperature measurements can be conducted with the probe. These measurements, for instance, provide both the temperature of a hot spot (i.e., a local temperature increase) and the location (or position) of said hot spot along the length of the probe cable.

Furthermore, due to the flexibility of the cable, the probe can easily fit into tight and confined spaces. For instance, the probe cable can be wrapped around components or devices.

The EM signal or wave that is emitted into the liquid metal path can be a radio frequency (RF) signal or wave or an optical signal or wave.

In particular, the liquid metal path is designed to guide the EM signal or wave along its length, in particular when at room temperature. In other words, the liquid metal path forms a waveguide for the EM signal or wave (similar to the optical fiber core of a fiber-optic cable).

The electrical characteristics of the liquid metal material can comprise an impedance, a resistance and/or a conductivity of the liquid metal material. These electrical characteristics of the liquid metal material can be temperature dependent. A (local) change in the electrical characteristics of the liquid metal material can cause the detectable change of the electrical parameter of the liquid metal path.

For instance, a change of the impedance of the liquid metal at or near the location of a temperature hot spot, causes a change of the total impedance of the liquid metal path. Based on an electrical measurement of this total impedance change, the temperature increase can be determined. At the same time, the impedance at the location of the hot spot causes a local discontinuity. An EM signal or wave which propagates through the liquid metal path is at least partially reflected at said discontinuity. By detecting the time between emission of the EM signal or wave into the liquid metal path and capture of the reflection, the position of the temperature increase along the length of the liquid metal path can be determined.

In an embodiment, the liquid metal material is configured to expand in response to the temperature increase, said expansion causing the change of the electrical characteristics of the liquid metal material.

In an embodiment, the liquid metal material comprises a eutectic gallium indium, EGaIn, alloy or a eutectic gallium indium tin, EGaInSn, alloy.

In particular, the liquid metal material is electrically conductive while in a liquid state at room temperature. Furthermore, the liquid metal material is preferably nontoxic.

In an embodiment, the probe comprises an electrically conductive element, in particular a flexible PCB ground plane, disposed in parallel to the liquid metal path.

In particular, the electrically conductive element is arranged outside of the sheath of the cable and extends along the length of the cable. The electrically conductive element can form a return path for a current that flows through the liquid metal path, e.g. when conducting a temperature measurement. Besides a PCB the electrically conductive element can be formed by a cable or other medium. The electrically conductive element is preferably flexible.

In an embodiment, the probe further comprises a load resistor, wherein the liquid metal path, the load resistor and the electrically conductive element are coupled in series.

This achieves the advantage that the electrical parameter, e.g. an impedance, resistance or conductivity, of the liquid metal path can be measured efficiently.

In an embodiment, the interface is coupled to the liquid metal path and to the electrically conductive element.

The interface can be configured to allow a measurement of the electrical parameter of the liquid metal path. Therefore, the interface can be electrically connected to the electrical terminals on both ends of the cable.

The interface can further be arranged for emitting the EM signals or waves into the liquid metal path and/or for receiving the reflected EM signals or waves from the liquid metal path.

In an embodiment, the probe comprises a metallic coating surrounding the sheath.

The metallic coating can shield the liquid metal path from interferences. Furthermore, the metallic coating can form the electrically conductive element and can function as ground plane.

The measurement system according to the invention as claimed achieves the advantage that a location of a temperature increase, e.g. a hot spot, along the length of the probe can be detected.

The measurement system can act as a time-domain reflectometer. In particular, the EM signal or wave propagates through the liquid metal path until it reaches the location of the changed electrical characteristic, e.g. an impedance discontinuity in the liquid metal path. The EM signal or wave can be at least partially reflected at said location, i.e. from said impedance discontinuity, and the reflected part of the EM signal/wave propagates back to the further terminal where it is captured by the capture unit.

In an embodiment, the processor further comprises an electrical measurement unit connectable to the electrical terminals on both ends of the cable; wherein the electrical measurement unit is configured to measure an electrical parameter, in particular a resistance or impedance, of the liquid metal path; and wherein the processor is configured to determine the increased temperature based on said electrical parameter.

This achieves the advantage that the measurement system can also determine the exact temperature at the location of the temperature increase (e.g., hotspot) by means of an electrical measurement.

Hereby, the "increased temperature" may refer to the temperature at or near the location of the externally induced temperature increase. In particular, the liquid metal path is heated to this temperature (at or near said location) which causes a change of the electrical parameter, e.g. the impedance and/or resistance, of the liquid metal path.

The electrical measurement unit can be connectable to the electrical terminals via the interface, i.e. the electrical measurement unit is connectable to the interface which is turn connected to the electrical terminals.

In an embodiment, the processor is configured to determine the increased temperature based on a comparison of the measured electrical parameter to a reference value.

In addition or alternatively, the processor can be configured to determine the increased temperature based on a known temperature dependence of the electrical parameter of the liquid metal, e.g. based on a mathematical formula which correlates the measured electrical parameter to a certain temperature of the liquid metal material.

According to the invention, there is provided a calibration method as defined in claim 10.

According to the invention, there is provided a position resolved temperature measurement as defined in claim 11. The method comprises: arranging a flexible cable in a measurement environment, wherein the flexible cable comprises a sheath surrounding an elongated channel, and a liquid metal material disposed in the elongated channel forming a liquid metal path, and wherein an externally induced temperature increase at a location along the length of the cable induces a change of electrical characteristics, in particular an increase of an impedance, of the liquid metal material at or near said location. The method further comprises: emitting an EM, electromagnetic, signal or wave into the liquid metal path; capturing a reflection of said EM signal or wave; and determining the location of the temperature increase along the length of the cable based on a time between the emission and the capture of the reflection of the EM signal or wave.

This achieves the advantage that a location of a temperature increase, e.g. a hot spot, can be detected efficiently. When arranging the flexible cable in the measurement environment, the cable can be wrapped around an object to be investigated or inserted into a confined space which is too small for a convention temperature sensor.

In an embodiment, the method comprises the further step of: measuring an electrical parameter, in particular a resistance or impedance, of the liquid metal path; and determining the increased temperature based on said electrical parameter.

This achieves the advantage that also the temperature at the location of the temperature increase (e.g., the hot spot) can be detected.

In an embodiment, the increased temperature is determined based on a comparison of the measured electrical parameter to a reference value.

The above description with regard to the probe according to the first aspect of the invention and the measurement system according to the second aspect of the invention are correspondingly valid for the method according to the fourth aspect of the invention.

### BRIEF DESCRIPTION OF THE DRAWINGS

The invention will be explained in the following together with the figures.
- Fig. 1: shows a schematic diagram of a probe for conducting position resolved temperature measurements according to an embodiment;
- Figs. 2a-b: show schematic diagrams of a probe according to an embodiment;
- Fig. 3: shows a cross-sectional view of a flexible cable of a probe according to an embodiment;
- Fig. 4: shows a schematic diagram of a measurement system for conducting position resolved temperature measurements according to an embodiment;
- Fig. 5: shows a flow chart of a calibration method according to an embodiment; and
- Fig. 6: shows a flow chart of a method for conducting position resolved temperature measurements according to an embodiment.

### DETAILED DESCRIPTION OF THE PREFERRED EMBODIMENTS

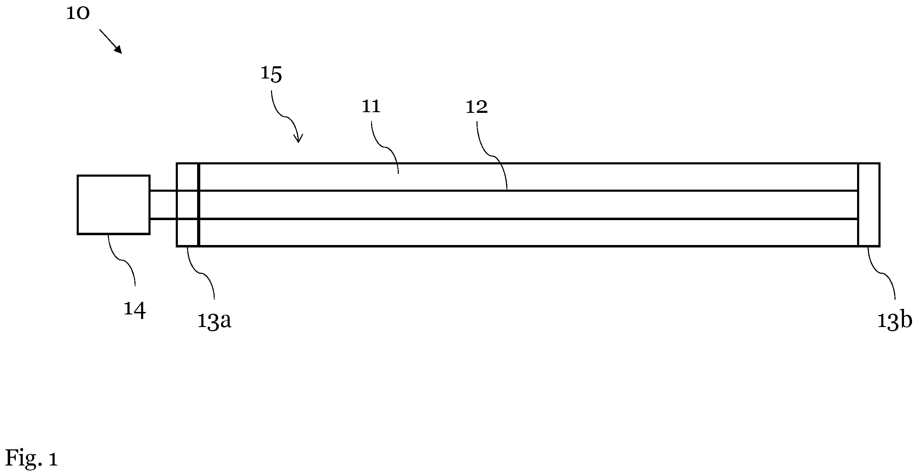

Fig. 1 shows a schematic diagram of a probe 10 for conducting position resolved temperature measurements according to an embodiment.

The probe 10 comprises a flexible cable 15, the flexible cable 15 comprises a sheath 11 surrounding an elongated channel, and a liquid metal material 12 disposed in the elongated channel forming a liquid metal path, wherein an externally induced temperature increase at a location along the length of the cable 15 induces a change of electrical characteristics, in particular an increase of an impedance, of the liquid metal material 12 at and/or near said location.

The probe 10 further comprises electrical terminals 13a, 13b arranged on both ends of the flexible cable 15 which are designed for a measurement of an electrical parameter of the liquid metal path, and an interface 14 arranged on one end of the flexible cable 15 which is designed for emitting an EM signal or wave into the liquid metal path.

The liquid metal material 12 in the sheath can be used as sensor element for conducting position resolved temperature measurements. In particular, the liquid metal material 12 is configured to expand in response to the temperature increase, said expansion causing the change of the electrical characteristics, in particular of the characteristic impedance, of the liquid metal material. The electrical characteristic can comprise an impedance, a resistance and/or a conductivity of the liquid metal material 12.

In particular, the temperature induced change of the electrical characteristic of the liquid metal material 12 at and/or near the location of the temperature increase, causes a change of the total impedance of the liquid metal path. This change of the total impedance of the liquid metal path can be detected and correlated to a certain temperature increase. The impedance or resistance of the liquid metal path can be measured over the electrical terminals 13a, 13b. In this way, a temperature measurement can be conducted.

At the same time, the location of the discontinuity (and thus the localized temperature increase) along the length of the cable 15 can be determined via a time-domain reflectometry (TDR) technique. Thereby, for instance, an EM signal with a fast edge is emitted into the liquid metal path via the interface 14. This EM signal edge is at least partially reflected from the impedance discontinuity (caused by the localized hot spot) in the liquid metal path, and the time required for the signal edge to return from the hot spot is measured. Using this TDR technique, an impedance change at a hot spot in the liquid metal path can be detected and the location of said impedance change can be determined. By a careful calibration at room temperature, a temperature increase can be measured along any point of the cable 15.

For instance, the EM signal or wave is emitted into the liquid metal path via the interface 14 and the reflection of the EM signal or wave is, in turn, captured via the interface 14 of the probe (e.g., using a capture unit connected to the interface).

The liquid metal path is preferably designed to guide the EM signal or wave along its length, in particular when at room temperature. In other words, the liquid metal path forms a waveguide for the EM signal or wave (similar to the optical fiber core of a fiber-optic cable).

Hence, the cable 15 can form a liquid metal micro "fiber" (with the liquid metal material instead of a conventional fiber material). This "microfiber" is flexible and can be easily routed, wrapped or pasted onto any device to detect temperature hot spots. The probe 10 can thereby be used to determine the location of temperature hots spots along the length of its cable 15.

For instance, the liquid metal material 12 is configured to conduct electricity whilst in a liquid state at room temperature.

The liquid metal material can be a eutectic gallium indium (EGaIn) alloy and/or a eutectic gallium indium tin (EGaInSn) alloy. For example, the liquid metal material can be Galinstan^{®} which is composed of 68.5% Ga, 21.5% In and 10.0% Sn (by weight) or a similar alloy. These alloy materials can be advantageously over other liquid metals, such as mercury, due to their low vapor pressure, low toxicity, low viscosity and metallic electrical conductivity performance.

The EM signal or wave can be a radio frequency (RF) signal or wave or an optical signal or wave. The interface 14 can be an RF interface, e.g. a SMA connector.

The sheath 11 can be formed from a flexible plastic material. The sheath 11 can comprise a sheet-like layer surrounding liquid metal material in the elongated channel.

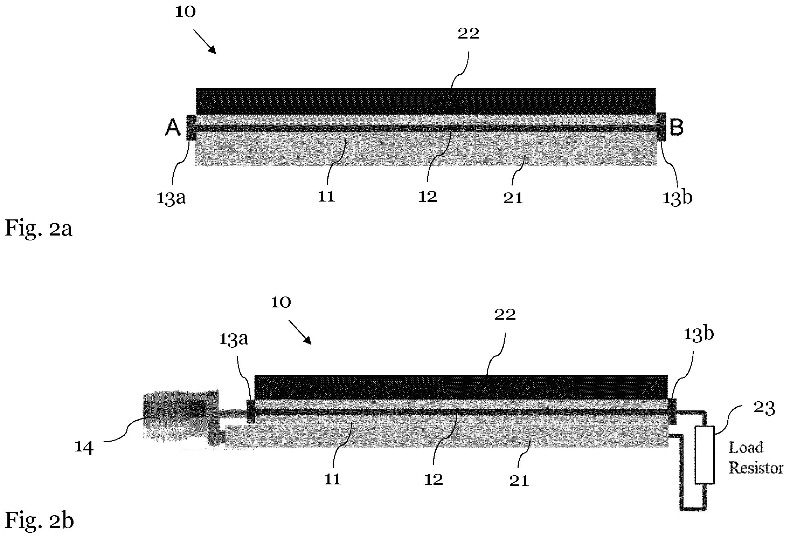

Fig. 2a shows a schematic diagram of the probe 10 according to an embodiment.

The probe 10 comprises a flexible PCB ground plane 21 disposed in parallel to the liquid metal path. The PCB ground plane 21 can form or comprise an electrically conductive element which can form a return path for a current that flows through the liquid metal path, e.g. when conducting a temperature measurement. Instead of the flexible PCB 21 the electrically conductive element can also be formed or comprised by a cable or other medium.

The probe 10 can further comprise a graphite sheet 22 which is arranged at least one side of the cable 15 and/or which surrounds the cable 15. The graphite sheet 22 can be designed to shield the cable, in particular the liquid metal path, from electromagnetic interferences.

The graphite shield 22 can further comprise an adhesive layer or tape for mounting the probe 10 to a surface, e.g. of an object to be examined (e.g., a device-under-test, DUT, or a circuit).

When surrounded by the PCB ground plane 21 and/or the graphite shield 22, the sheath 11 can form a flexible "microfiber" plastic core. The liquid metal material 12 is thereby embedded in a length of this flexible plastic "microfiber".

A temperature measurement can be conducted by measuring the resistance and/or impedance between one end A and the other end B of the length of the liquid metal path enclosed by the sheath material 11.

Fig. 2b shows a schematic diagram of the probe 10 according to an embodiment.

The probe 10 shown in Fig. 2b comprises a load resistor 23. The load resistor 23 can have an electrical resistance of 50 ohm. One end of the cable 15 can be terminated into this load resistor 23.

The liquid metal path, the load resistor 23 and the PCB ground plane 21, i.e. the electrically conductive element, can be coupled in series.

The interface 14 can be an electric interface or an RF interface. The interface 14 can comprise a coaxial connector such as a SMA connector or other type of RF connector. The interface 14 can be grounded to the flexible PCB ground plane 21. In particular, the interface 14 is electrically connected to the electrical terminals 13a, 13b on both ends of the cable 15.

For instance, a part of the interface 14 is electrically connected to the electrical terminal 13a which is arranged on the same end of cable 15 as the interface, e.g., via a short wire bound connection, and another part of the interface 14 is electrically connected to the electrical terminal 13b at the opposing end of the cable via the electrically conductive element 21. In this way, the electrical parameter of the liquid metal path can be measured between the electrical terminals 13a, 13b via the interface 14.

Thus, the interface 14 can be used for both emitting and receiving EM signals or waves into respectively from the liquid metal path, and for measuring the electrical parameter of the liquid metal path between the terminals 13a, 13b.

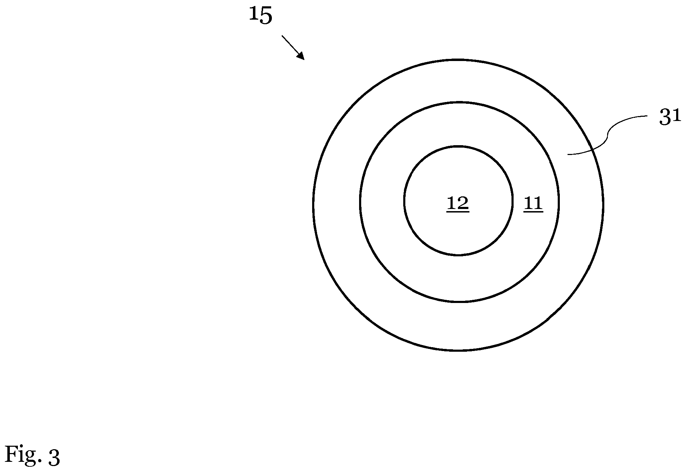

Fig. 3 shows a cross-sectional view of the flexible cable 15 of the probe 10 according to an embodiment.

The cable 15 shown in Fig. 3 comprises an additional metallic coating surrounding the sheath 11.

The metallic coating 31 can be formed from a thin layer of a flexible silver particle compound material. This coating 31 may act as a ground shield and transform the liquid metal "microfiber" into an RF coaxial "microfiber". Using this approach, the entire length of the cable 15 can be easily routed onto and around irregular shapes in tight and confined spaces. For conducting position resolved temperature measurements one end of the cable 15 can be connected to a suitable TDR device.

The probe 10 respectively the cable 15 shown in Fig. 1 may comprise any of the additional features of the probe 10 respectively the cable 15 shown in Figs. 2a, 2b and 3.

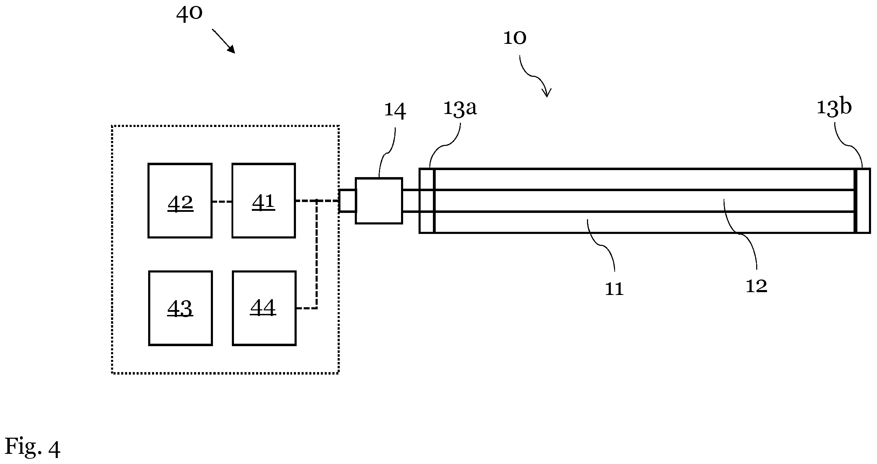

Fig. 4 shows a schematic diagram of a measurement system 40 for conducting position resolved temperature measurements according to the invention as claimed.

The measurement system 40 comprises the probe 10, e.g. as shown in any one of Figs. 1-3, and an emitter 41 configured to emit an EM signal or wave into the liquid metal path of the probe 10 via the interface 14.

The measurement system 40 further comprises a capture unit 42 configured to capture a reflection of said EM signal or wave, and a processor 43 configured to determine the location of the externally induced temperature increase along the length of the cable 15 based on a time between the emission and the capture of the reflection of the EM signal or wave.

The capture unit 42 can also be connected to the interface 14 and can receive the reflected EM signal or wave from the interface 14.

The emitter 41 and the capture unit 42 can be formed by a transceiver, in particular an RF transceiver. The transceiver can be connected to the interface 14 of the probe 10. The emitter 41, the capture unit 42 and the processor 43 can further form a TDR device or instrument of the measurement system 40. This TDR device or instrument can be configured to perform a time-domain reflectometry (TDR) technique.

When determining the location of the temperature increase, the processor 43 can further consider parameters of the probe cable 15, e.g., known length of the cable 15 or properties of the liquid metal material 12, in particular, its RF or optical properties (impedance at room temperature, refractive index etc.).

The measurement system 10 can further comprise an electrical measurement unit 44 connectable to the electrical terminals 13a, 13b on both ends of the cable 15. For instance, the electrical measurement unit 44 is connectable to the interface 14, e.g. a CMA connector, which is in turn connected to the electrical terminals 13a, 13b.

The electrical measurement unit 44 can be configured to measure the electrical parameter, in particular the resistance or impedance, of the liquid metal path. The processor 43 of the system 10 can be configured to determine the increased temperature based on said electrical parameter.

For instance, the processor 43 is configured to determine the increased temperature based on a comparison of the measured electrical parameter to a reference value.

The reference value can be an electrical parameter which was measured with the probe 10 at room temperature, in particular with the entire liquid metal path at room temperature. The reference value can be stored in a memory of the measurement system 40.

In particular, the processor 43 is configured to calculate the temperature based on a set of calibration data (e.g., comprising the reference value) and/or based on an equation which comprises the electrical properties of the liquid metal material 12 as a function of temperature. In particular, the length of the liquid metal path can determine the measurement sensitive, wherein the longer the path the higher the sensitivity.

The emitter 41, the capture unit 42, the processor 43 and the electrical measurement unit 44 can form an impedance respectively wave reflection characterization device. This device can be connectable to the interface 14 of the probe 10, e.g. via a suitable connector.

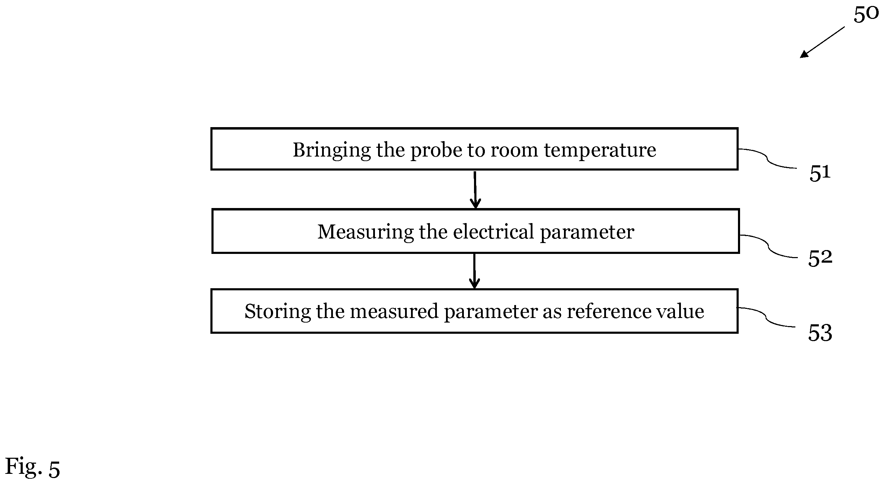

Fig. 5 shows a flow chart of a method 50 for calibrating the measurement system 40 according to an embodiment.

The calibration method 50 comprises the steps of: bringing 51 the probe 10 to room temperature; measuring 52 the electrical parameter of the liquid metal path using the electrical measurement unit 44; and storing 53 the measured electrical parameter as a reference value. During a later temperature measurement with the probe 10, the processor 34 of the system 40 can compare a measured electrical parameter to this reference value in order to determine the temperature of a hot spot.

For instance, the probe can be brought to room temperature by arranging the measurement system 40 in a calibration environment which is at room temperature.

The calibration method 50 can further comprise the steps of: emitting an EM, electromagnetic, signal or wave into one end of the liquid metal path (which is at room temperature); capturing a reflection of said EM signal or wave from the other end of the liquid metal path; and determining a time between the emission and the capture of the reflection of the EM signal or wave. In this way, the propagation time of the EM signal/wave through the entire liquid metal path (in both directions) can be determined. This value can be stored as a further reference value. During a later temperature measurement with the probe 10, the processor 34 of the system 40 can compare a measured time-delay between an EM signal emission and subsequent capture of the reflection to this further reference value in order to determine the location of the hot spot along the length of the cable 15.

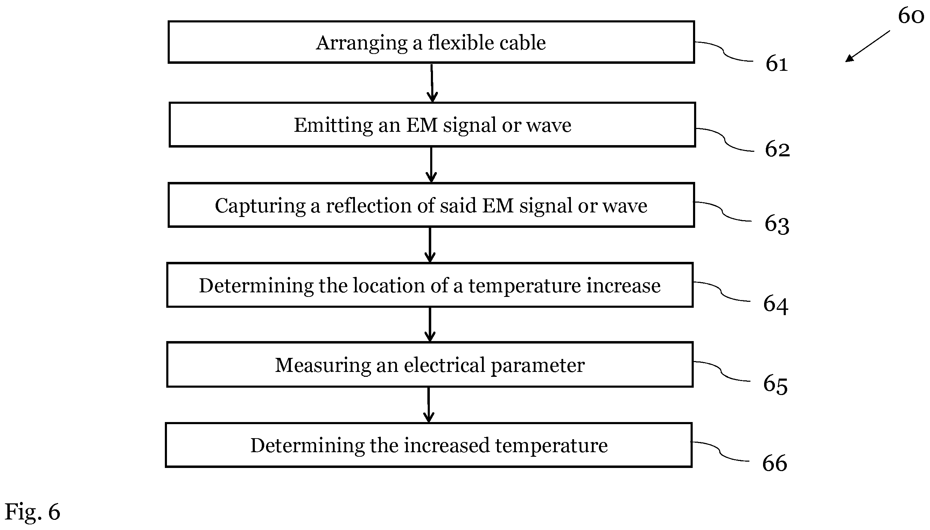

Fig. 6 shows a flow chart of a method 60 for conducting position resolved temperature measurements according to an embodiment.

The method 60 comprises the step of: arranging 61 a flexible cable 15 in a measurement environment, wherein the flexible cable 15 comprises a sheath 11 surrounding an elongated channel, and a liquid metal material 12 disposed in the elongated channel forming a liquid metal path, and wherein a temperature increase at a location along the length of the cable 15 induces a change of electrical characteristics, in particular an increase of an impedance, of the liquid metal material 12 at or near said location. The method 50 comprises the further steps of: emitting 62 the EM signal or wave into the liquid metal path; capturing 63 the reflection of said EM signal or wave; and determining 64 the location of the temperature increase along the length of the cable 15 based on a time between the emission and the capture of the reflection of the EM signal or wave.

The method 60 can further comprise the steps of: measuring 65 an electrical parameter, in particular a resistance or impedance, of the liquid metal path; and determining 66 the increased temperature, i.e. the (increased) temperature of the liquid metal at or near the location, based on said electrical parameter. For instance, the increased temperature can be determined based on a comparison of the measured electrical parameter to a reference value.

For instance, the method 60 can be carried out with the system 40 shown in Fig. 4.

## Claims

1. A measurement system (40) for conducting position resolved temperature measurements, comprising:
a probe (10) comprising a flexible cable (15), the flexible cable (15) comprising:
- a sheath (11) surrounding an elongated channel, and
- a liquid metal material (12) disposed in the elongated channel forming a liquid metal path;
wherein an externally induced temperature increase at a location along the length of the cable (15) induces a change of electrical characteristics, in particular an increase of an impedance, of the liquid metal material at or near said location;
wherein the probe (10) further comprises:
electrical terminals (13a, 13b) arranged on both ends of the flexible cable (15), wherein the electrical terminals (13a, 13b) are designed for a measurement of an electrical parameter of the liquid metal path; and
an interface (14) arranged on one end of the flexible cable (15), wherein the interface (14) is designed for emitting an EM, electromagnetic, signal or wave into the liquid metal path;
**characterized in that**
the measurement system (40) further comprises:
an emitter (41) configured to emit an EM signal or wave into the liquid metal path via the interface (14) of the probe (10);
a capture unit (42) configured to capture a reflection of said EM signal or wave; and
a processor (43) configured to determine the location of the externally induced temperature increase along the length of the cable (15) based on a time between the emission and the capture of the reflection of the EM signal or wave.

2. The measurement system (40) of claim 1,
wherein the liquid metal material (12) is configured to expand in response to the temperature increase, said expansion causing the change of the electrical characteristics of the liquid metal material (12).

3. The measurement system (40) of claim 1 or 2,
wherein the liquid metal material (12) comprises a eutectic gallium indium, EGaIn, alloy or a eutectic gallium indium tin, EGaInSn, alloy.

4. The measurement system (40) of any one of the preceding claims, further comprising:
an electrically conductive element, in particular a flexible PCB ground plane (21), disposed in parallel to the liquid metal path.

5. The measurement system (40) of claim 4, further comprising:
a load resistor (23), wherein the liquid metal path, the load resistor (23) and the electrically conductive element are coupled in series.

6. The measurement system (40) of any one of claims 4 or 5,
wherein the interface (14) is coupled to the liquid metal path and to the electrically conductive element.

7. The measurement system (40) of any one of the preceding claims, further comprising:
a metallic coating (31) surrounding the sheath (11).

8. The measurement system (40) of any one of the preceding claims, further comprising:
an electrical measurement unit (44) connectable to the electrical terminals on both ends of the cable (15);
wherein the electrical measurement unit (44) is configured to measure an electrical parameter, in particular a resistance or impedance, of the liquid metal path;
wherein the processor (43) is configured to determine the increased temperature based on said electrical parameter.

9. The measurement system (40) of claim 8,
wherein the processor (43) is configured to determine the increased temperature based on a comparison of the measured electrical parameter to a reference value.

10. A method (50) for calibrating the measurement system (40) of any one of the preceding claims,
bringing (51) the probe (10) to room temperature;
measuring (52) the electrical parameter of the liquid metal path using the electrical measurement unit (44); and
storing (53) the measured electrical parameter as a reference value.

11. A method (60) for conducting position resolved temperature measurements, comprising:
arranging (61) a flexible cable (15) in a measurement environment,
wherein the flexible cable (15) comprises a sheath (11) surrounding an elongated channel, and a liquid metal material (12) disposed in the elongated channel forming a liquid metal path, and
wherein an externally induced temperature increase at a location along the length of the cable (15) induces a change of electrical characteristics, in particular an increase of an impedance, of the liquid metal material (12) at or near said location;
**characterized in that**
the method (60) further comprises:
emitting (62) an EM, electromagnetic, signal or wave into the liquid metal path;
capturing (63) a reflection of said EM signal or wave; and
determining (64) the location of the temperature increase along the length of the cable (15) based on a time between the emission and the capture of the reflection of the EM signal or wave.

12. The method (60) of claim 11, further comprising:
measuring (65) an electrical parameter, in particular a resistance or impedance, of the liquid metal path; and
determining (66) the increased temperature based on said electrical parameter.

13. The method (60) of claim 12,
wherein the increased temperature is determined based on a comparison of the measured electrical parameter to a reference value.

## Patentansprüche

1. Messsystem (40) zum Durchführen von positionsaufgelösten Temperaturmessungen, umfassend:
eine Sonde (10), umfassend ein flexibles Kabel (15), das flexible Kabel (15) umfassend:
- eine Hülle (11), die einen länglichen Kanal umgibt, und
- ein Flüssigmetallmaterial (12), das in dem länglichen Kanal angeordnet ist und einen Flüssigmetallpfad ausbildet;
wobei ein extern induzierter Temperaturanstieg an einer Stelle entlang der Länge des Kabels (15) eine Änderung von elektrischen Eigenschaften, insbesondere einen Anstieg einer Impedanz, des Flüssigmetallmaterials an oder in der Nähe der Stelle induziert;
wobei die Sonde (10) ferner umfasst:
elektrische Anschlüsse (13a, 13b), die an beiden Enden des flexiblen Kabels (15) eingerichtet sind, wobei die elektrischen Anschlüsse (13a, 13b) für eine Messung eines elektrischen Parameters des Flüssigmetallpfads ausgelegt sind; und
eine Schnittstelle (14), die an einem Ende des flexiblen Kabels (15) eingerichtet ist, wobei die Schnittstelle (14) zum Emittieren eines elektromagnetischen Signals, EM-Signal, oder einer elektromagnetischen Welle, EM-Welle, in den Flüssigmetallpfad ausgelegt ist;
**dadurch gekennzeichnet, dass**
das Messsystem (40) ferner umfasst:
einen Emitter (41), der konfiguriert ist, um ein EM-Signal oder eine EM-Welle über die Schnittstelle (14) der Sonde (10) in den Flüssigmetallpfad zu emittieren;
eine Erfassungseinheit (42), die konfiguriert ist, um eine Reflexion des EM-Signals oder der EM-Welle zu erfassen, und
einen Prozessor (43), der konfiguriert ist, um die Stelle des extern induzierten Temperaturanstiegs entlang der Länge des Kabels (15) basierend auf einer Zeit zwischen der Emission und der Erfassung der Reflexion des EM-Signals oder der EM-Welle zu bestimmen.

2. Messsystem (40) nach Anspruch 1,
wobei das Flüssigmetallmaterial (12) konfiguriert ist, um sich als Reaktion auf den Temperaturanstieg auszudehnen, wobei die Ausdehnung die Änderung der elektrischen Eigenschaften des Flüssigmetallmaterials (12) verursacht.

3. Messsystem (40) nach Anspruch 1 oder 2,
wobei das Flüssigmetallmaterial (12) eine eutektische Gallium-Indium-Legierung, EGaln-Legierung, oder eine eutektische Gallium-Indium-ZinnLegierung, EGalnSn-Legierung, umfasst.

4. Messsystem (40) nach einem der vorstehenden Ansprüche, ferner umfassend:
ein elektrisch leitfähiges Element, insbesondere eine flexible PCB-Massefläche (21), die parallel zu dem Flüssigmetallpfad angeordnet ist.

5. Messsystem (40) nach Anspruch 4, ferner umfassend:
einen Lastwiderstand (23), wobei der Flüssigmetallpfad, der Lastwiderstand (23) und das elektrisch leitfähige Element in Reihe gekoppelt sind.

6. Messvorrichtung (40) nach einem der Ansprüche 4 oder 5,
wobei die Schnittstelle (14) mit dem Flüssigmetallpfad und mit dem elektrisch leitfähigen Element gekoppelt ist.

7. Messsystem (40) nach einem der vorstehenden Ansprüche, ferner umfassend:
eine metallische Beschichtung (31), die die Hülle (11) umgibt.

8. Messsystem (40) nach einem der vorstehenden Ansprüche, ferner umfassend:
eine elektrische Messeinheit (44), die mit den elektrischen Anschlüssen an beiden Enden des Kabels (15) verbindbar ist;
wobei die elektrische Messeinheit (44) konfiguriert ist, um einen elektrischen Parameter, insbesondere einen Widerstand oder eine Impedanz, des Flüssigmetallpfads zu messen;
wobei der Prozessor (43) konfiguriert ist, um die angestiegene Temperatur basierend auf dem elektrischen Parameter zu bestimmen.

9. Messsystem (40) nach Anspruch 8,
wobei der Prozessor (43) konfiguriert ist, um die angestiegene Temperatur basierend auf einem Vergleich des gemessenen elektrischen Parameters mit einem Referenzwert zu bestimmen.

10. Verfahren (50) zum Kalibrieren des Messsystems (40) nach einem der vorstehenden Ansprüche,
Bringen (51) der Sonde (10) auf Raumtemperatur;
Messen (52) des elektrischen Parameters des Flüssigmetallpfads unter Verwendung der elektrischen Messeinheit (44); und
Speichern (53) des gemessenen elektrischen Parameters als einen Referenzwert.

11. Verfahren (60) zum Durchführen von positionsaufgelösten Temperaturmessungen, umfassend:
Einrichten (61) eines flexiblen Kabels (15) in einer Messumgebung,
wobei das flexible Kabel (15) eine Hülle (11) umfasst, die einen länglichen Kanal umgibt, und ein Flüssigmetallmaterial (12), das in dem länglichen Kanal angeordnet ist und einen Flüssigmetallpfad ausbildet, und
wobei ein extern induzierter Temperaturanstieg an einer Stelle entlang der Länge des Kabels (15) eine Änderung der elektrischen Eigenschaften, insbesondere einen Anstieg der Impedanz, des Flüssigmetallmaterials (12) an oder in der Nähe der Stelle induziert;
**dadurch gekennzeichnet, dass**
das Verfahren (60) ferner umfasst:
Emittieren (62) eines elektromagnetischen Signals, EM-Signal, oder einer elektromagnetischen Welle, EM-Welle, in den Flüssigmetallpfad;
Erfassen (63) einer Reflexion des EM-Signals oder der EM-Welle; und
Bestimmen (64) der Stelle des Temperaturanstiegs entlang der Länge des Kabels (15) basierend auf einer Zeit zwischen der Emission und der Erfassung der Reflexion des EM-Signals oder der EM-Welle.

12. Verfahren (60) nach Anspruch 11, ferner umfassend:
Messen (65) eines elektrischen Parameters, insbesondere eines Widerstands oder einer Impedanz, des Flüssigmetallpfads; und
Bestimmen (66) der angestiegenen Temperatur basierend auf dem elektrischen Parameter.

13. Verfahren (60) nach Anspruch 12,
wobei die angestiegene Temperatur basierend auf einem Vergleich des gemessenen elektrischen Parameters mit einem Referenzwert bestimmt wird.

## Revendications

1. Système de mesure (40) permettant d'effectuer des mesures de température résolues en position, comprenant :
une sonde (10) comprenant un câble (15) souple, le câble (15) souple comprenant :
- une gaine (11) entourant un canal allongé, et
- un matériau métallique liquide (12) disposé dans le canal allongé formant un chemin de métal liquide ;
dans lequel une augmentation de température induite extérieurement au niveau d'un emplacement le long de la longueur du câble (15) induit une modification de caractéristiques électriques, en particulier une augmentation d'une impédance, du matériau métallique liquide au niveau ou à proximité dudit emplacement ;
dans lequel la sonde (10) comprend en outre :
des bornes électriques (13a, 13b) disposées aux deux extrémités du câble (15) souple, dans lequel les bornes électriques (13a, 13b) sont conçues pour mesurer un paramètre électrique du chemin de métal liquide ; et
une interface (14) disposée à une extrémité du câble (15) souple, dans lequel l'interface (14) est conçue pour émettre un signal ou une onde électromagnétique, EM, dans le chemin de métal liquide ;
**caractérisé en ce que**
le système de mesure (40) comprend en outre :
un émetteur (41) configuré pour émettre un signal ou une onde EM dans le chemin de métal liquide par l'intermédiaire de l'interface (14) de la sonde (10) ;
une unité de capture (42) configurée pour capturer une réflexion dudit signal ou de ladite onde EM ; et
un processeur (43) configuré pour déterminer l'emplacement de l'augmentation de température induite extérieurement le long de la longueur du câble (15) sur la base d'un temps entre l'émission et la capture de la réflexion du signal ou de l'onde EM.

2. Système de mesure (40) selon la revendication 1,
dans lequel le matériau métallique liquide (12) est configuré pour se dilater en réponse à l'augmentation de température, ladite dilatation entraînant la modification des caractéristiques électriques du matériau métallique liquide (12).

3. Système de mesure (40) selon la revendication 1 ou 2,
dans lequel le matériau métallique liquide (12) comprend un alliage de gallium-indium eutectique, EGaln, ou un alliage de gallium-indium-étain eutectique, EGalnSn.

4. Système de mesure (40) selon l'une quelconque des revendications précédentes, comprenant en outre :
un élément électriquement conducteur, en particulier un plan de masse (21) de carte de circuits imprimés souples, disposé parallèlement au chemin de métal liquide.

5. Système de mesure (40) selon la revendication 4, comprenant en outre :
une résistance de charge (23), dans lequel le chemin de métal liquide, la résistance de charge (23) et l'élément électriquement conducteur sont couplés en série.

6. Système de mesure (40) selon l'une quelconque des revendications 4 ou 5,
dans lequel l'interface (14) est couplée au chemin de métal liquide et à l'élément électriquement conducteur.

7. Système de mesure (40) selon l'une quelconque des revendications précédentes, comprenant en outre :
un revêtement métallique (31) entourant la gaine (11).

8. Système de mesure (40) selon l'une quelconque des revendications précédentes, comprenant en outre :
une unité de mesure électrique (44) pouvant être connectée aux bornes électriques à des deux extrémités du câble (15) ;
dans lequel l'unité de mesure électrique (44) est configurée pour mesurer un paramètre électrique, en particulier une résistance ou une impédance, du chemin de métal liquide ;
dans lequel le processeur (43) est configuré pour déterminer la température accrue sur la base dudit paramètre électrique.

9. Système de mesure (40) selon la revendication 8,
dans lequel le processeur (43) est configuré pour déterminer la température accrue sur la base d'une comparaison du paramètre électrique mesuré avec une valeur de référence.

10. Procédé (50) permettant de calibrer le système de mesure (40) selon l'une quelconque des revendications précédentes,
le fait d'amener (51) la sonde (10) à une température ambiante ;
la mesure (52) du paramètre électrique du chemin de métal liquide à l'aide de l'unité de mesure électrique (44) ; et
le stockage (53) du paramètre électrique mesuré en tant que valeur de référence.

11. Procédé (60) permettant d'effectuer des mesures de température résolues en position, comprenant :
la disposition (61) d'un câble (15) souple dans un environnement de mesure,
dans lequel le câble (15) souple comprend une gaine (11) entourant un canal allongé, et un matériau métallique liquide (12) disposé dans le canal allongé formant un chemin de métal liquide, et
dans lequel une augmentation de température induite extérieurement au niveau d'un emplacement le long de la longueur du câble (15) induit une modification de caractéristiques électriques, en particulier une augmentation d'une impédance, du matériau métallique liquide (12) au niveau ou à proximité dudit emplacement ;
**caractérisé en ce que**
le procédé (60) comprend en outre :
l'émission (62) d'un signal ou d'une onde électromagnétique, EM, dans le chemin de métal liquide ;
la capture (63) d'une réflexion dudit signal ou de ladite onde EM ; et
la détermination (64) de l'emplacement de l'augmentation de température le long de la longueur du câble (15) sur la base d'un temps entre l'émission et la capture de la réflexion du signal ou de l'onde EM.

12. Procédé (60) selon la revendication 11, comprenant en outre :
la mesure (65) d'un paramètre électrique, en particulier une résistance une impédance, du chemin de métal liquide ; et
la détermination (66) de la température accrue sur la base dudit paramètre électrique.

13. Procédé (60) selon la revendication 12,
dans lequel la température accrue est déterminée sur la base d'une comparaison du paramètre électrique mesuré avec une valeur de référence.
